# EUROPÄISCHE PATENTANMELDUNG

(11) **EP 0 624 445 A1**
(43) Veröffentlichungstag der Anmeldung: **17.11.1994**
(21) Anmeldenummer: 94107392.6
(22) Anmeldetag: 11.05.1994
(51) Int. Cl.: B29B 17/00, B02C 18/44, B02C 23/12, B29B 13/10

(54) **Schredder**

(30) Priorität: 12.05.1993 DE 9307222 U
(71) Anmelder: Bauer, Manfred, D-91781 Weissenburg (DE)
(72) Erfinder: Bauer, Manfred, D-91781 Weissenburg (DE)
(74) Vertreter: Sasse, Volker, Dipl.-Ing.

(57) **Zusammenfassung**

Ein Schredder zum Zerkleinern von Baumbestandteilen oder Garten- und Hausabfällen ist im Auswurfskanal (A) mit einer Sperrfläche mit einer Vielzahl von Durchlässen zum Granulieren des durchzusetzenden Materials ergänzt. Für einen guten Durchsatz ist die Zerkleinerungskammer im Inneren mit besonderen Merkmalen ausgestattet. Durch die ergänzende Sperrfläche als Lochplatte entsteht ein granuliertes Endprodukt von im wesentlichen gleicher Größe.

## Beschreibung

Die Erfindung betrifft einen Schredder gemäß dem Oberbegriff von Anspruch 1.

Ein Schredder zum Zerkleinern von Stämmen und anderen Baumbestandteilen oder Garten- und Hausabfällen für die Kompostierung ist aus DE-GM 89 11 149.4 bekannt. Bei Drehung des Rotors werden die eingeführten Gegenstände zerhackt oder zerschlagen und aufgefasert und durch die Drehbewegung des Rotors sowie die durch diesen erzeugte Luftströmung durch den Auswurfkanal abgeführt. Derartige Schredder sind gerade zur Kompostierung zweckmäßig und weit verbreitet. Neben der Entsorgung und Weiterverwendung organischer Abfälle tritt im zunehmendem Maße das Problem der Entsorgung und/oder sinnvollen Weiterverwendung von aus Styropor bestehenden Gegenständen auf, wie sie von allen denkbaren Verpackungen oder Bauabfällen und dgl. bekannt sind. Aus Styropor bestehende Gegenstände sind bei extrem geringem Gewicht sehr großvolumig und schlecht zu zerkleinem oder zu entsorgen. Sie nehmen im Sondermüll einen erheblichen und teueren Anteil ein. Es besteht deshalb ein starker Bedarf, Gegenstände aus Styropor (in Formen geschäumtes Polystyrol) einfacher entsorgen und/oder weiterverwenden zu können.

Der Neuerung liegt die Aufgabe zugrunde, das akute Problem der Entsorgung und/oder Weiterverwertung von Styropor auf baulich einfache, ungefährliche, umweltschonende Weise zu minimieren.

Die gestellte Aufgabe wird mit einem Schredder mit den Merkmalen des Anspruchs 1 gelöst.

Bei dieser Ausbildung des Schredders wird das Styropor, das der Rotor nur unzureichend in ungleich große Brocken zu zerkleinern vermag, durch die vom Rotor aufgebrachte Beschleunigung und vor allem durch den zwangsweise entstehenden Luftstrom über die Durchlässe der Sperrfläche zu einem gleichmäßigen Granulat zerkleinert. Im wesentlichen reicht der Strömungsdruck der vom Rotor erzeugten Luftströmung aus, die Styroporbrocken durch die Durchlässe zu zwingen und dabei in die vorbestimmte Granulatgröße zu zerkleinern. Es ist zwar möglich, daß die vom Rotor nachgeschobenen und sich an der Sperrfläche stauenden Styroporbrocken die unmittelbar an der Sperrfläche liegenden Styroporbrocken durch die Durchlässe drücken. In der Praxis zeigt sich aber, daß allein die Luftströmung ausreicht, die an der Sperrfläche noch groben Brocken in ein gleichmäßiges Granulat zu zerkleinern, das durch die Restluftströmung problemlos von der Sperrfläche abgeführt wird und sich einfach sammeln läßt. Das erzeugte Granulat ist sehr homogen und es läßt sich durch die Größe, Form und/oder Anordnung der Durchlässe in der Sperrfläche in die gewünschte Granulatgröße genau einstellen und reproduzierbar beibehalten. Der Schredder ist eine einfach zu bedienende, kostengünstige und ungefährliche Einrichtung, mit der sich Styroporabfälle in praktisch unbeschränktem Ausmaß verarbeiten lassen. Das Styroporgranulat beansprucht weniger Raum als die sperrigen Gegenstände und kann abgepackt entsorgt werden. Es ist aber auch denkbar, das Styroporgranulat weiterzuverwenden, z.B. zur Auflockerung von Böden, als Schüttgut bei der Bauisolierung oder als Verpackungs-Hilfsmaterial oder dergleichen.

Es ist auch daran gedacht, die schon in Betrieb gewesenen Schredder für die Kompostierung umzurüsten, um Styroporgegenstände einfach granulieren zu können. Die Sperrfläche paßt in den Anschlußrahmen. Der Schredder kann - falls erwünscht - abwechselnd zum Zerkleinern von organischen Abfällen und zum Zerkleinem von Styroporabfällen benutzt werden. Eine Umrüstung ist besonders einfach durch das Einbringen der gelochten Sperrfläche.

Die Ausführungsform gemäß Anspruch 2 ist wichtig, weil der Durchsatz an Styropor sehr hoch ist, falls die Sperrfläche möglichst nahe an der Zerkleinerungskammer angeordnet ist. Dabei ist es auch vorteilhalt, wenn die gelochte Sperrfläche die Zerkleinerungskammer zum Auswurfschacht abschließt und dabei gewölbt sich zum Rotorradius anpaßt. Es werden tote Ecken im Gehäuse vermieden und das zerschlagene Styropor wird mit der Durchsatzluft restlos durch die gelochte Sperrfläche durchgedrückt.

Eine kostengünstige, einfach herzustellende und eine hohe Qualität des Granulats gewährleistende Ausführungsform geht aus Anspruch 3 hervor. Es hat sich als recht vorteilhaft erwiesen, die Löcher möglichst regelmäßig anzuordnen, weil dies ein sehr homogenes Granulat ergibt. Bei einer Lochgröße von 6 bis 15 mm, vorzugsweise 8 bis 10 mm, die je nach Leistungsfähigkeit des Schredders variieren kann, wird ein besonders für die Bodenauflockerung gut brauchbares Granulat erzielt, in dem die Styroporpartikel gleichförmige Größen von ca. 8 bis 10 mm haben. Die Durchsatzleistung ist besonders hoch, wenn zwischen den Löchern nur optimal schmale Stege vorliegen, die andererseits aber die ausreichende Stabilität der Lochplatte gewährleisten. Anstelle einer Lochplatte kann auch eine Siebplatte oder eine Schlitzplatte oder ein ähnliches Substrat eingesetzt werden, das in der Lage ist, größere Styroporbrokken unter dem Einfluß des Strömungsdrucks in ein gleichmäßiges Granulat umzuwandeln.

Die Maßnahme gemäß Anspruch 4 ist vorteilhaft damit unterschiedlich große Granulate in ein und derselben Maschine erzeugbar sind.

Besonders zweckmäßig ist die Ausführungsform gemäß Anspruch 5, weil sich die Lochplatte mit wenigen Handgriffen anbringen und wieder entfernen läßt, sicher sitzt, und die vom Rotor erzeugte Energie (Luftströmung) optimal genutzt wird.

Es hat sich besonders vorteilhalt gezeigt, die Vorrichtung gemäß Anspruch 6 auszubilden. Die auf der Innenseite der Radialwand sitzenden Erhebungen tragen ganz erheblich bei der Zerkleinerung des durchzusetzenden Materials bei. Außerdem rufen die Erhebungen Turbulenzen im erzeugenden Luftstrom hervor, so daß die zerschlagenen Teilchen gut mitgerissen und gegen die Lochplatte geschleudert werden, an der sie dann in die gewünschte Größe zerlegt werden.

Wenn die Erhebungen von Kantstäben gebildet sind, wirken deren Kanten tatkräftig bei der Zerkleinerung mit. Dabei ist es recht günstig, wenn die Kantstäbe auswechsel- oder auch entfernbar sind. Die Vielzahl der Stäbe wird vom zu zerschlagenden Material abhängen. Außerdem lassen sich durch das Auswechseln schnelle und günstige Reparaturen vornehmen.

Eine große Wirkung wird erreicht, wenn die Merkmale des Anspruchs 8 genutzt werden. Durch die geringe Spaltausbildung zwischen der Erhebung und dem Zerkleinerungswerkzeug wird das zu zerschlagende Teil ständig bearbeitet und bekommt sehr schnell die Größe für die Lochplatte, um durch die Löcher durchgedrückt zu werden. Es hat sich gezeigt, daß es bereits ausreichend ist, wenn nur ein Teilbereich der Umfangsfläche mit Erhebungen ausgestattet ist. Dieser kann in Abhängigkeit vom zu zerkleinernden Material gewählt werden.

Bei der Ausführungsform gemäß Anspruch 9 wird das durch die Durchlässe strömende Styroporgranulat durch die Luftströmung ausgetragen, wobei der sich verengende Auswurfrüssel für eine wünschenswerte Beschleunigung sorgt, die zu einem kräftigen Strahl des Styroporgranulats führt, das sich dann leicht sammeln läßt.

Dabei ist es gemäß Anspruch 10 vorteilhaft, wenn an der Mündung des Auswurfrüssels eine Halterung für einen Sack vorgesehen ist. Damit ist die Gefahr gebannt, daß die nur schwer einzusammelnden Granulatpartikel die Umwelt verschmutzen könnten. Bei der Ausführungsform kann auch ein hoher Durchsatz an Granulat sicher und dicht gesammelt werden, weil die mit dem Granulat ausströmende Luft durch die Wandung des Sacks abströmt und das Granulat dicht und kompakt zurückbleibt. Der offenbarte Schredder ist besonders zweckmäßig, weil er eine Doppelfunktion auszuführen vermag, indem er entweder zum Zerkleinern organischer Abfälle auf herkömmliche Weise oder zum Zerkleinern von Styroporgegenständen zu einem leicht entsorgbaren oder gut weiterverwendbaren Granulat einsetzbar ist. Die Umrüstarbeiten zwischen den beiden Funktionen sind einfach und auch rasch durchführbar. Es wird lediglich die Lochplatte eingesetzt oder entfernt. Dadurch lassen sich recht einfach die bereits im Einsatz befindlichen Schredder nachrüsten, wobei gegebenenfalls ein Anschlußrahmen am Auswurfkanal vorgesehen werden muß, um die Sperrfläche paßgerecht einsetzen zu können.

Anhand der Zeichnung wird eine beispielhafte Ausführungsform der Erfindung dargestellt.

Es zeigen:
- Figur 1: eine schematische Seitenansicht eines Schredders bei der Zerkleinerung von Styroporgegenständen,
- Figur 2: eine Sperrfläche in einer Draufsicht, wie sie in dem Schredder von Figur 1 vorgesehen sein kann.

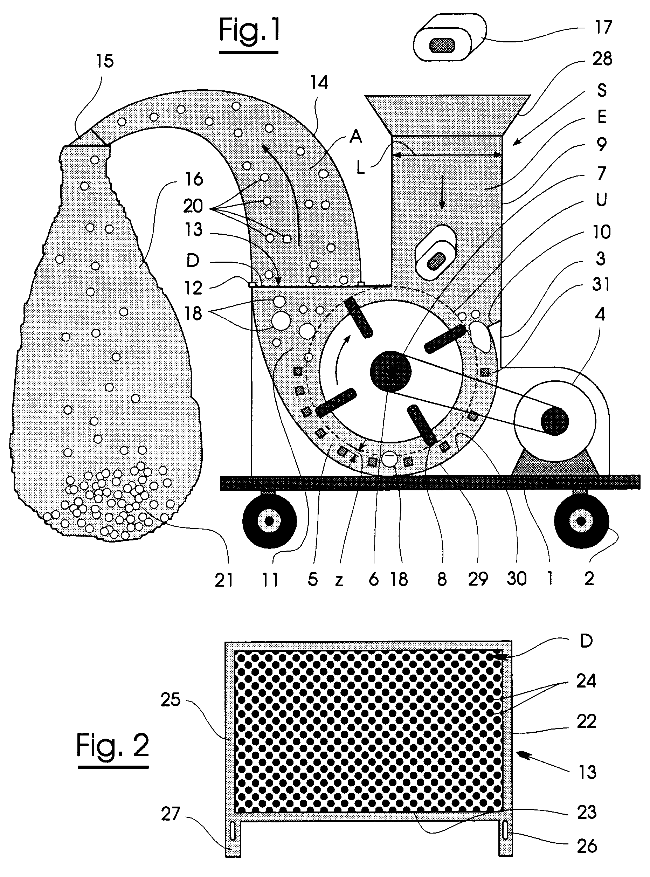

Ein Schredder S gemäß Figur 1 (eine Vorrichtung zum Zerkleinern von Gegenständen oder organischem oder anorganischem Material) weist ein Gehäuse 3 mit einem Grundrahmen 1 auf Rädern 2 auf, neben dem am Grundrahmen 1 ein Antriebsmotor 4 (Elektromotor oder Verbrennungsmotor), montiert ist. Das Gehäuse 3 umschließt eine Zerkleinerungskammer 5, in die von oben ein Einführkanal E führt, und aus der ein Auswurfkanal A herausführt. In der Zerkleinerungskammer 5 ist z.B. mit horizontaler Drehachse 6 ein Rotor 7 drehbar gelagert, der umfangsseitig Zerkleinerungswerkzeuge 8 trägt. Die Zerkleinerungswerkzeuge 8 können entweder Zähne oder Schläger oder andere, übliche Zerkleinerungswerkzeuge sein. Der Einführkanal E, der vorzugsweise konstanten Querschnitt über seine Länge aufweist, wird von einem schachtartigen Gehäuseteil 9 umfaßt, der einen aufgesetzten Trichter 28 trägt. Am Eingang der Zerkleinerungskammer 5 ist an der Gehäusewandung eine Einführ- oder Gegenkante 10 vorgesehen, die mit den Zerkleinerungswerkzeugen 8 zusammenarbeitet, um eingeführte Gegenstände günstig zu erfassen. Die radiale Gehäusewandung 29 ist an ihrer Innenseite 30 mit aus Kantstäben bestehenden und in Abstand gesetzten Erhebungen 31 ausgestattet, die parallel zur Drehachse 6 des Rotors 7 ausgerichtet sind und geringsten Abstand z vom Umfangskreis U der radial weggerichteten Zerkleinerungswerkzeuge 8 haben. Dadurch besteht eine wirkungsvolle Zusammenarbeit zwischen dem Zerkleinerungswerkzeug 8 und den Erhebungen 31 bei der Zerkleinerung des zu verarbeitenden Materials und dessen Beförderung. Es ist bereits ausreichend, wenn die Erhebungen 31 nur auf einem Teilbereich der radialen Wandung 29 vorgesehen sind. Die Erhebungen 31, die von auswechselbaren Kantstäben gebildet sind, stecken in dem Gehäuse 3 und lassen sich seitlich herausziehen, wie aus Figur 1 ersichtlich ist.

Vom unteren Teil der Zerkleinerungskammer 5 erstreckt sich ein Auswurfschacht 11 nach oben, der mit einem bei diesem Ausführungsbeispiel horizontal liegenden Anschlußrahmen 12 endet und nach oben offen ist. Im Anschluß an den Rahmen 12 befindet sich eine quer zum Auswurfweg durch den Auswurfkanal A liegende Sperrfläche 13 mit einer Vielzahl von Durchlässen D (Lochblech oder Sieb). Die Sperrfläche 13 erstreckt sich zweckmäßigerweise über den gesamten Querschnitt. Die Sperrfläche 13 könnte aber auch weiter unten und näher am Rotor 7 oder weiter oben angeordnet sein. Am Anschlußrahmen 12 ist ein nach oben verlaufender und sich verjüngender und allmählich abbiegender Auswurfrüssel 14 befestigt, der an seinem freien Ende eine Halterung 15 für einen luftdurchlässigen Sack 16 besitzt.

Bei der beschriebenen Ausrüstung des Schredders S dient dieser zum Herstellen eines gleichförmigen Granulats 21 aus Styropor, wozu Styroporgegenstände 17 durch den Einführkanal E eingeführt, durch den Rotor 7 mit den Zerkleinerungswerkzeugen 8 zunächst in Brocken unterschiedlicher Form und Größe zerkleinert werden, ehe die Brocken (z.B. 18) durch die Luftströmung, die der Rotor 7 erzeugt, so durch die Durchlässe D gedrückt werden, daß gleich große und in etwa gleich geformte Partikel 20 entstehen, die durch den Auswurfrüssel 14 fliegen und im Sack 16 als Granulat 21 gesammelt werden. Die mitströmende Luft kann durch die durchlässige Wand des Sacks 16 abströmen. Sobald der Sack 16 gefüllt ist, wird er von der Halterung 15 abgenommen und durch einen frischen ersetzt oder ausgeleert. Die eingesetzten Kantstäbe 31 bieten nicht nur die Gegenschneide zum Zerkleinern der Brocken 18, sondern rufen starke Verwirbelung beim Luftstrom auf, der das zerschlagene Material mitreißt und gegen die Sperrfläche 13 schleudert und durch die Durchlässe D drückt.

Figur 2 zeigt in einer Draufsicht die Sperrfläche 13, die bei dieser Ausführungsform als Lochplatte 22 mit in etwa rechteckiger Gestalt und einem Lochfeld 23 ausgebildet ist. Im Lochfeld 23 sind bei dieser Ausführungsform gleich große und regelmäßig angeordnete Löcher 24, z.B. Bohrungen mit einem Durchmesser zwischen 5 und 16 mm, vorzugsweise 8 bis 10 mm, angeordnet. Das Lochfeld 23 wird von einem rahmenartigen Teil 25 der Lochplatte 22 umgeben. Befestigungsstellen 26 und 27 erleichtern das Einsetzen und Festlegen der Lochplatte 22 im Anschlußrahmen 12 des Schredders S von Figur 1. Die Lochplatte 22 besteht zweckmäßigerweise aus Stahl. Es ist aber auch denkbar, ein Drahtnetz oder eine Kunststoff-Lochplatte zu verwenden. Denkbar ist es ferner, mehrere Lochplatten hintereinander zu setzen.

Nach Entnahme der Sperrfläche 13 kann der Schredder S wie ein herkömmlicher Schredder zum Zerkleinern von organischen Abfällen benutzt werden.

Es ist ferner denkbar, die Sperrfläche 13 in der Form an den Umfang des Rotors anzuschmiegen und näher zu diesem zu setzen als gezeigt.

## Patentansprüche

1. Schredder (1) zum Zerkleinern von Gegenständen (17) oder Abfällen auf Schüttgut-Partikelgröße, mit einem wenigstens einen Einführkanal (E) zu einer Zerkleinerungskammer (5) und wenigstens einen Auswurfkanal (A) aufweisenden Gehäuse, in dem in der Zerkleinerungskammer wenigstens ein zu einer Drehung in Drehrichtung vom Einführkanal (E) zum Auswurfkanal (A) antreibbarer Rotor (7) angeordnet ist, an dessen Umfang Zerkleinerungswerkzeuge (8) vorgesehen sind, und daß innerhalb des Auswurfweges im Auswurfkanal (A) und nahe der Zerkleinerungskammer (5) wenigstens eine den Auswurfweg quer durchsetzende Sperrfläche (13) mit einer Vielzahl von Durchlässen (D) zum Granulieren des durchzusetzenden Materials (von Styropor) angeordnet ist.

2. Schredder nach Anspruch 1, dadurch gekennzeichnet, daß die Sperrfläche (13) im oder kurz nach dem Übergangsbereich von der Zerkleinerungskammer (5) zum Auswurfkanal (A) angeordnet ist.

3. Schredder nach Anspruch 1 oder 2, dadurch gekennzeichnet, daß die Sperrfläche (13) eine Loch- oder Siebplatte (22) ist.

4. Schredder nach wenigstens einem der Ansprüche 1 bis 3, dadurch gekennzeichnet, daß die Lochplatte (22) herausnehmbar oder durch eine gleich große Lochplatte (22) mit anderer Lochgröße oder anderem Lochfeld (23) ersetzbar angeordnet ist.

5. Schredder nach wenigstens einem der Ansprüche 1 bis 4, dadurch gekennzeichnet, daß die Zerkleinerungskammer (5) mit einem sich in Auswurfrichtung erweiternden Auswurfschacht (11) vereinigt ist, der mit einem, vorzugsweise in etwa waagerecht liegenden, Anschlußrahmen (12) für einen Auswurfrüssel (14) endet, der mit dem Auswurfschacht (11) den Auswurfkanal (A) bildet, und daß die Sperrfläche (13) im oder beim Anschlußrahmen (12) angeordnet ist.

6. Schredder nach Anspruch 1 oder 5, dadurch gekennzeichnet, daß die Zerkleinerungskammer (5) an der Innenseite (30) ihrer radialen Wandung (29) vom Einführkanal (E) bis zum Auswurfkanal (A) in Drehrichtung des Rotors (7) quer dazu ausgerichtete Erhebungen (31) aufweist.

7. Schredder nach Anspruch 6, dadurch gekennzeichnet, daß die Erhebungen (31) von auswechselbaren Kantstäben gebildet sind.

8. Schredder nach Anspruch 6 oder 7, dadurch gekennzeichnet, daß die Erhebungen (31) wenigstens im Teilbereich der radialen Wandung (29) im geringsten Abstand (z) vom Umfangskreis (U) des vom Rotor (7) radial weggerichteten Zerkleinerungswerkzeug (8) gelagert sind.

9. Schredder nach wenigstens einem der Ansprüche 1 bis 8, gekennzeichnet durch einen lösbar am Anschlußrahmen (12) des Auswurfschachts (11) angebrachten, gebogenen und sich in Auswurfrichtung verengenden Auswurfrüssel (14).

10. Schredder nach Anspruch 9, dadurch gekennzeichnet, daß an der Mündung des Auswurfrüssels (14) eine Halterung (15) für einen Sack (16) vorgesehen ist.
